# FASCICULE DE BREVET EUROPEEN

(11) **EP 4 025 779 B1**
(45) Date de publication et mention de la délivrance du brevet: **30.10.2024**
(21) Numéro de dépôt: 20775915.0
(22) Date de dépôt: 02.09.2020
(51) Int. Cl.: F02K 1/00, F02K 1/52, F02K 1/72, F02K 1/76

(54) **INVERSEUR DE POUSSÉE COMPRENANT DES VERROUS PRIMAIRES DÉCALÉS PAR RAPPORT À UN PLAN DE SYMÉTRIE DU CAPOT MOBILE**
SCHUBUMKEHRVORRICHTUNG MIT GEGENÜBER EINER SYMMETRIEEBENE DER BEWEGLICHEN HAUBE VERSETZTEN PRIMÄRRIEGELN
THRUST REVERSER COMPRISING PRIMARY LATCHES OFFSET WITH RESPECT TO A PLANE OF SYMMETRY OF THE MOVABLE HOOD

(30) Priorité: 05.09.2019 FR 1909759
(43) Date de publication de la demande: 13.07.2022
(73) Titulaire: Safran Nacelles, 76700 Gonfreville-l'Orcher (FR)
(72) Inventeur: CARUEL, Pierre, Charles, 77550 MOISSY-CRAMAYEL (FR); CHARLIAC, Fabien, 77550 MOISSY-CRAMAYEL (FR); BRAVIN, Fabien, 77550 MOISSY-CRAMAYEL (FR); CHAPELAIN, Loïc, 77550 MOISSY-CRAMAYEL (FR)
(74) Mandataire: Brevalex
(86) Numéro de dépôt international: PCT/FR2020/051520
(87) Numéro de publication internationale: WO 2021/044097

(56) Documents cités:
- US-A1- 2012 124 963
- US-A1- 2013 062 433
- US-A1- 2019 016 471

## Description

### Domaine technique

L'invention se rapporte au domaine des inverseurs de poussée pour ensemble propulsif d'aéronef et concerne plus spécifiquement le système de verrouillage d'une structure externe mobile.

L'invention trouve notamment application dans le domaine des avions comprenant des ensembles propulsifs fixés sur une partie arrière du fuselage.

### État de la technique antérieure

Les ensembles propulsifs montés en partie arrière du fuselage d'un avion sont généralement configurés pour orienter la poussée latéralement afin de réduire le moment de lacet en cas de panne de l'un des turboréacteurs.

Lorsqu'un tel ensemble propulsif comprend un inverseur de poussée, la contre-poussée est généralement produite à partir d'un mélange de flux primaire et secondaire générés par le turboréacteur correspondant. L'inverseur de poussée comprend typiquement une structure externe mobile entre une position de fermeture et une position d'ouverture, le long d'un axe central sensiblement horizontal de l'ensemble propulsif. En position de fermeture, les flux primaire et secondaire sont dirigés vers une tuyère d'éjection de manière à générer la poussée. En position d'ouverture, la structure externe mobile dégage une ouverture radiale permettant de rediriger une partie des flux primaire et secondaire vers l'avant de l'ensemble propulsif afin de générer la contre-poussée.

Des nacelles formant une tuyère sont connues par exemple des documents US2013/062433 A1, US2019/016471 A1 et US 2012/124963 A1.

Pour orienter la poussée latéralement, l'extrémité de sortie de la structure externe mobile, qui forme généralement ladite tuyère d'éjection, définit un plan vertical non perpendiculaire à l'axe central de l'ensemble propulsif. Typiquement, la normale à ce plan vertical forme avec cet axe central un angle compris entre 1° et 4°.

En général, la structure externe mobile d'un tel inverseur est réalisée sous forme de deux demi-capots reliés l'un à l'autre par des moyens de fixation amovibles.

La jonction des deux demi-capots tend à perturber l'écoulement de fluide générant la poussée, ce qui dégrade les performances aérodynamiques de l'ensemble propulsif.

### Exposé de l'invention

L'invention vise à procurer un inverseur de poussée capable de pallier tout ou partie des inconvénients précités.

A cet effet, l'invention a pour objet un inverseur de poussée pour ensemble propulsif d'aéronef, cet inverseur comprenant :
- une structure externe mobile présentant un axe central longitudinal, cette structure externe étant mobile entre une position de fermeture, dans laquelle celle-ci est apte à guider un écoulement de fluide dans l'ensemble propulsif de manière à générer une poussée, et une position d'ouverture dans laquelle la structure externe mobile dégage une ouverture radiale apte à évacuer une partie dudit écoulement de fluide de l'ensemble propulsif de manière à générer une contre-poussée,
- un actionneur, tel qu'un vérin, configuré pour déplacer la structure externe mobile entre les positions de fermeture et d'ouverture,
- deux verrous primaires configurés pour verrouiller la structure externe mobile en position de fermeture.

Cet inverseur est configuré pour orienter l'écoulement de fluide générant la poussée selon une direction oblique par rapport à l'axe central longitudinal, vers un premier côté d'un premier plan longitudinal médian passant par l'axe central longitudinal.

Selon l'invention, la structure externe mobile est annulaire, les verrous primaires sont tous deux situés dudit premier côté de ce premier plan longitudinal médian, et l'actionneur est situé de l'autre côté du premier plan longitudinal médian, l'un de ces verrous primaires étant situé d'un côté d'un deuxième plan longitudinal médian perpendiculaire au premier plan longitudinal médian, l'autre verrou primaire étant situé de l'autre côté de ce deuxième plan longitudinal médian.

Dans le présent document, un plan longitudinal médian est un plan fictif qui passe par l'axe central longitudinal de la structure externe mobile, et un plan transversal est un plan fictif qui coupe cet axe central longitudinal. Un plan est dit oblique par rapport à un autre plan lorsque ces deux plans ne sont ni perpendiculaires ni parallèles entre eux.

Par ailleurs, l'expression « structure annulaire » désigne une structure monobloc comprenant un périmètre circonférentiellement fermé. La structure externe mobile est donc une structure continue sur 360 degrés, au moins sur une portion longitudinale de cette structure. Le terme « monobloc » n'exclut pas le cas d'une structure fabriquée par assemblage, par exemple par soudage, de plusieurs pièces, dans la mesure où la structure ainsi fabriquée forme, après assemblage, une seule pièce dont toutes les parties sont fixement solidaires les unes des autres. Au sens de la présente invention, une structure externe mobile formée par deux demi-capots n'est donc pas une structure annulaire.

D'une part, une structure externe mobile annulaire permet de supprimer les discontinuités de liaison formées par les capots d'une structure externe mobile conventionnelle, ce qui permet d'améliorer les performances aérodynamiques et structurales de l'ensemble propulsif.

D'autre part, l'invention permet de déplacer la structure externe mobile à l'aide d'un unique actionneur, compte tenu de la nature monobloc de la structure externe mobile et du positionnement des verrous primaires. Comme indiqué plus loin ci-dessous, l'invention n'est toutefois pas limitée à un inverseur dans lequel la structure externe mobile est déplacée par un unique actionneur.

L'invention permet en outre de verrouiller la structure externe mobile en dépit de sa déformation sous charge dissymétrique, laquelle peut notamment résulter de l'orientation latérale de la poussée et de pressions non uniformes appliquées sur l'extérieur de cette structure externe mobile liées par exemple à la présence du fuselage de l'aéronef ou du mât de l'ensemble propulsif sur lequel cet inverseur est monté.

Par exemple, dans un mode de réalisation, la structure externe mobile peut comprendre une extrémité de sortie définissant un plan transversal oblique par rapport au premier plan longitudinal médian de manière à orienter l'écoulement de fluide générant la poussée selon ladite direction oblique.

Une telle géométrie de l'extrémité de sortie de la structure externe mobile, qui forme ainsi une tuyère d'éjection de l'inverseur, est courante dans les ensembles propulsifs montés en partie arrière du fuselage d'un avion, afin de réduire le moment de lacet en cas de panne de l'un des turboréacteurs.

Quelle qu'en soit la cause, une orientation de la poussée selon ladite direction oblique se traduit par la présence d'une composante de poussée perpendiculaire à l'axe central longitudinal de la structure externe mobile. Cette composante génère un moment tendant à faire basculer la structure externe mobile autour d'un axe sensiblement vertical.

Le décalage des verrous primaires par rapport au premier plan longitudinal médian, du même côté que celui vers lequel la poussée est orientée, permet à ces verrous de reprendre l'effort axial résultant du moment de basculement de manière à créer un moment qui compense ce moment de basculement.

Il est ainsi possible d'annuler le moment résultant de manière à éviter ou limiter le basculement ou la déformation de la structure externe mobile en dépit de l'orientation oblique de la poussée.

En général, l'angle de déviation de poussée est relativement faible, typiquement inférieur à 5 degrés par rapport à l'axe central longitudinal. Le décalage des verrous primaires requis pour empêcher le basculement de la structure externe mobile est donc lui aussi relativement faible. Typiquement, chacun des deux verrous primaires peut être positionné à un angle compris entre 100° et 120° par rapport à un point de la structure externe mobile situé d'un deuxième côté du premier plan longitudinal médian opposé audit premier côté, et situé dans le deuxième plan longitudinal médian.

Compte tenu de l'amplitude relativement faible du décalage des verrous primaires par rapport au premier plan longitudinal médian, l'actionneur qui est situé dudit deuxième côté de ce premier plan suffit à produire sur la structure externe mobile l'effort axial requis pour verrouiller les verrous primaires, c'est-à-dire l'effort axial permettant d'approcher suffisamment des verrous primaires les parties de la structure externe mobile devant coopérer avec ces verrous pour permettre leur verrouillage ou leur déverrouillage.

L'invention permet ainsi de verrouiller la structure externe mobile sous l'action d'un unique actionneur, à l'aide de deux verrous primaires qui suffisent par ailleurs à empêcher le basculement de la structure externe mobile en dépit de la déviation latérale de la poussée.

Il en résulte notamment une réduction des jeux entre la structure externe mobile et la partie fixe de l'inverseur en position de fermeture et par conséquent une amélioration globale des performances aérodynamiques.

De préférence, les deux verrous primaires peuvent être situés dans un plan de verrouillage parallèle audit premier plan longitudinal médian.

Une disposition symétrique des verrous primaires par rapport au deuxième plan longitudinal médian permet notamment d'équilibrer les efforts appliqués sur la structure externe mobile en position de fermeture.

Dans un mode de réalisation, chacun des deux verrous primaires peut être positionné à une distance angulaire de l'actionneur comprise entre 100° et 120°, de préférence environ 110°.

Comme indiqué ci-dessus, la structure externe mobile peut être déplacée par plusieurs actionneurs, c'est-à-dire par l'actionneur mentionné ci-dessus qui est situé du deuxième côté du premier plan longitudinal médian et par un ou plusieurs autres actionneurs situés ou non du premier côté de ce premier plan longitudinal médian.

Il est toutefois préféré que ledit actionneur soit unique, autrement dit que le déplacement de la structure externe mobile soit réalisé uniquement par cet actionneur, sans assistance d'un autre actionneur.

La commande de la position de la structure externe mobile à l'aide d'un unique actionneur simplifie en effet la structure et le fonctionnement de l'inverseur et permet de réduire sa masse et son coût.

En particulier, un actionneur unique permet d'éviter la complexité de la synchronisation rencontrée dans les systèmes d'actionnement multi-vérins conventionnels.

De préférence, l'actionneur, ou au moins l'un des actionneurs lorsque l'inverseur en comprend plusieurs, peut être traversé par le deuxième plan longitudinal médian.

L'invention a aussi pour objet un ensemble propulsif d'aéronef, cet ensemble propulsif comprenant un inverseur de poussée tel que décrit ci-dessus.

Dans un mode de réalisation, cet ensemble propulsif peut comprendre un mât d'accrochage de cet ensemble propulsif à un fuselage dudit aéronef, le mât comprenant un carénage abritant ledit actionneur, ou l'un au moins des actionneurs lorsque l'inverseur en comprend plusieurs.

Le placement d'un actionneur dans le mât permet de réduire son impact aérodynamique.

L'invention a aussi pour objet un aéronef comprenant au moins un tel ensemble propulsif.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique d'un aéronef conforme à l'invention ;
[Fig. 2] est une vue schématique en coupe axiale d'un ensemble propulsif conforme à l'invention ;
[Fig. 3] est une vue schématique en perspective d'une partie d'un inverseur de poussée conforme à l'invention, cette figure montrant un vérin de commande d'une structure externe mobile de l'inverseur ainsi qu'une coulisse d'un dispositif de guidage de cette structure externe mobile, l'inverseur étant dans une configuration de poussée directe dans laquelle la structure externe mobile est dans une position de fermeture ;
[Fig. 4] est une vue schématique en perspective de l'inverseur de la figure 3, l'inverseur étant dans une configuration d'inversion de poussée dans laquelle la structure externe mobile est dans une position d'ouverture ;
[Fig. 5] est une vue schématique en perspective de l'inverseur de la figure 3 en configuration de poussée directe, cette figure montrant un verrou primaire dans un état de verrouillage de la structure externe mobile ;
[Fig. 6] est une vue schématique en perspective de l'inverseur de la figure 3 en configuration d'inversion de poussée, cette figure montrant une structure interne permettant de recouvrir les grilles radialement à l'intérieur lorsque l'inverseur est en configuration de poussée directe ;
[Fig. 7] est une vue schématique en perspective de l'inverseur de la figure 3 en configuration d'inversion de poussée, cette figure montrant un élément de carénage d'un mât ainsi qu'une pièce de glissement du dispositif de guidage ;
[Fig. 8] est une vue schématique en perspective de l'inverseur de la figure 3 en configuration de poussée directe, cette figure montrant la pièce de glissement du dispositif de guidage ainsi qu'un carénage externe recouvrant des grilles de l'inverseur ;
[Fig. 9] est une vue schématique en perspective de l'inverseur de la figure 3 en configuration de poussée directe, cette figure montrant la pièce de glissement du dispositif de guidage ainsi que le carénage externe recouvrant des grilles de l'inverseur.

### Description détaillée de modes de réalisation

Chacune des figures décrites ci-après comprend un référentiel X, Y et Z définissant respectivement des directions latérale, verticale et longitudinale.

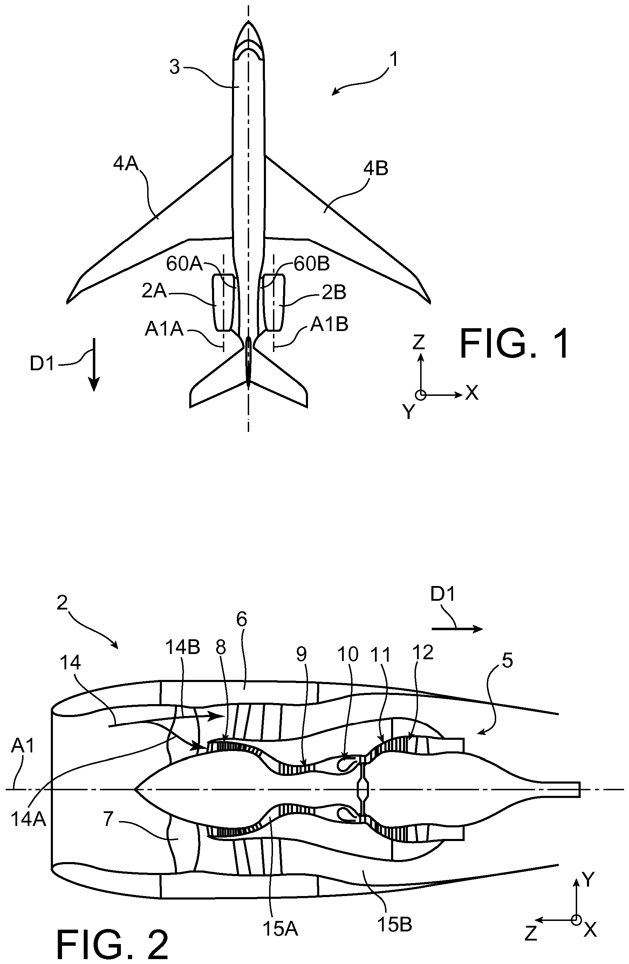

Il est représenté à la figure 1 un avion 1 comprenant deux ensembles propulsifs 2A et 2B montés via des mâts 60A et 60B sur la partie arrière du fuselage 3, en aval des ailes 4A et 4B.

Dans la présente description, les termes « amont », « aval », « avant » et « arrière » sont définis par rapport à un sens D1 d'écoulement d'air par rapport à l'avion 1 lorsque celui-ci est propulsé, le sens D1 étant opposé au sens du déplacement de l'avion 1.

Les ensembles propulsifs 2A et 2B s'étendent chacun le long d'un axe central longitudinal A1A, A1B sensiblement parallèle à la direction longitudinale Z, de sorte que l'air et les gaz traversant ces ensembles propulsifs 2A et 2B et contribuant à la propulsion de l'avion 1 circulent dans ces ensembles dans le sens D1.

Dans cet exemple, chacun des ensembles propulsifs 2A et 2B est similaire à l'ensemble propulsif 2 illustré à la figure 2.

De manière connue en soi, l'ensemble propulsif 2 de la figure 2 comprend une turbomachine 5 carénée par une nacelle 6. Dans cet exemple, la turbomachine 5 est un turboréacteur à double corps et à double flux.

Le turboréacteur 5 présente un axe central longitudinal A1 autour duquel s'étendent ses différents composants, en l'occurrence, de l'avant vers l'arrière du turboréacteur 5, une soufflante 7, un compresseur basse pression 8, un compresseur haute pression 9, une chambre de combustion 10, une turbine haute pression 11 et une turbine basse pression 12. Les compresseurs 8 et 9, la chambre de combustion 10 et les turbines 11 et 12 forment un générateur de gaz.

Lors du fonctionnement du turboréacteur5, un écoulement d'air 14 pénètre dans l'ensemble propulsif 2 par une entrée d'air en amont de la nacelle 6, traverse la soufflante 7 puis se divise en un flux primaire 14A central et un flux secondaire 14B. Le flux primaire 14A s'écoule dans une veine primaire 15A de circulation des gaz traversant le générateur de gaz. Le flux secondaire 14B s'écoule dans une veine secondaire 15B entourant le générateur de gaz et délimitée radialement vers l'extérieur par la nacelle 6.

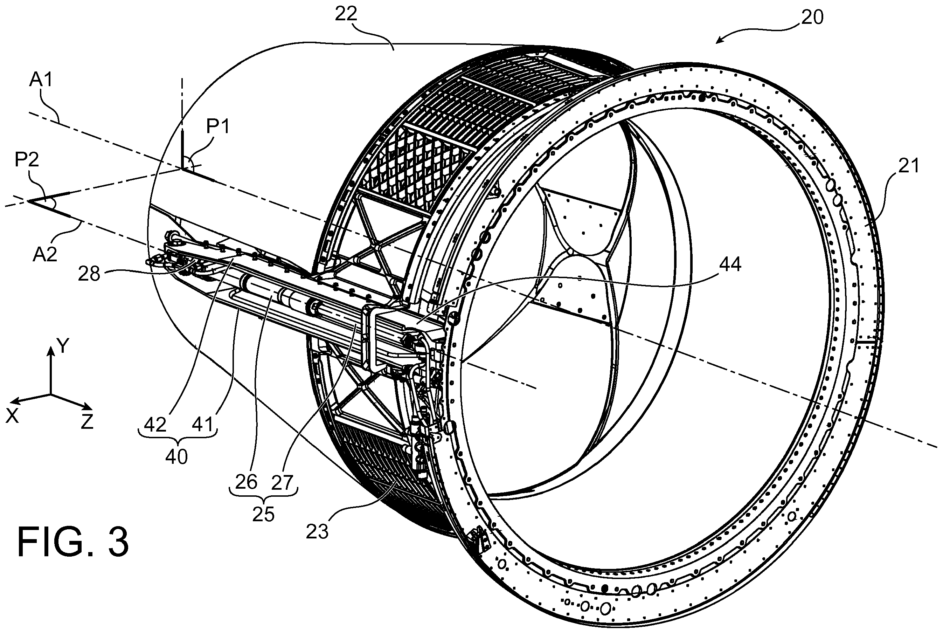

L'invention se rapporte plus spécifiquement à un inverseur de poussée 20 tel qu'illustré aux figures 3 à 9, cet inverseur 20 ayant pour fonction d'inverser une partie de la poussée générée par un tel ensemble propulsif 2 afin de freiner l'avion 1 lors de son atterrissage.

L'inverseur 20 peut bien entendu équiper un ensemble propulsif différent de celui de la figure 2 sans sortie du cadre de l'invention.

En référence à la figure 3, l'inverseur 20 comprend une structure fixe comportant notamment un cadre avant 21. Le cadre avant 21 est dans cet exemple destiné à relier l'inverseur 20 à la nacelle 6 de l'ensemble propulsif 2, par fixation de ce cadre avant 21 sur un cadre arrière (non représenté) de la nacelle 6.

L'inverseur 20 comprend par ailleurs une structure externe mobile 22 formant un capot mobile en translation axiale selon l'axe A1 par rapport à la structure fixe 21.

L'axe A1 correspond ici à la fois à un axe central longitudinal de l'inverseur 20, à l'axe central longitudinal du turboréacteur 5 ainsi qu'à un axe central longitudinal de l'ensemble propulsif 2.

La structure externe mobile 22 est dans cet exemple une structure annulaire d'axe A1 réalisée d'une seule pièce.

L'inverseur 20 comprend par ailleurs des grilles 23 configurées pour orienter vers l'avant de l'ensemble propulsif 2 le flux de fluide dévié pour générer la contre-poussée (voir plus loin ci-dessous).

Les grilles 23 sont dans cet exemple solidaires de la structure externe mobile 22. Dans un mode de réalisation non représenté, les grilles 23 sont solidaires de la structure fixe de l'inverseur 20.

Dans cet exemple, l'inverseur de poussée 20 est destiné à être monté à l'arrière de l'ensemble propulsif 2 de manière à générer une contre-poussée à partir d'un flux mélangé comprenant un mélange des flux primaire 14A et secondaire 14B sortant respectivement de la veine primaire 15A et de la veine secondaire 15B de l'ensemble propulsif 2.

Les figures 3, 5, 8 et 9 montrent l'inverseur 20 dans une configuration de poussée directe, dans laquelle la structure externe mobile 22 est dans une position de fermeture, c'est-à-dire dans une position avancée par rapport au cadre avant 21 de la structure fixe.

En position de fermeture, la structure externe mobile 22 contribue au guidage des flux primaire 14A et secondaire 14B vers une sortie d'éjection en aval de l'ensemble propulsif 2 de manière à générer une poussée.

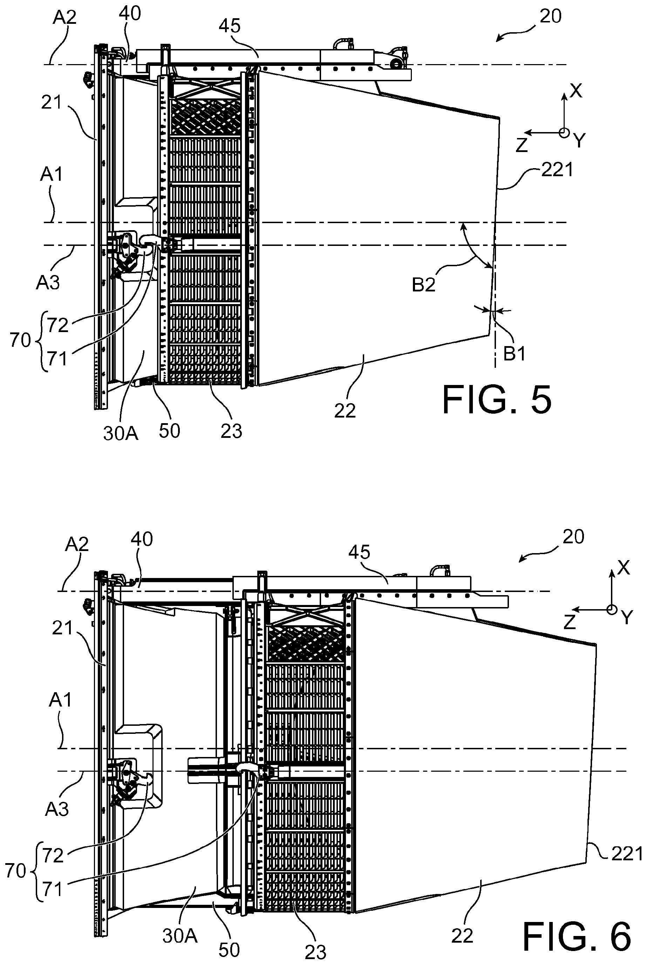

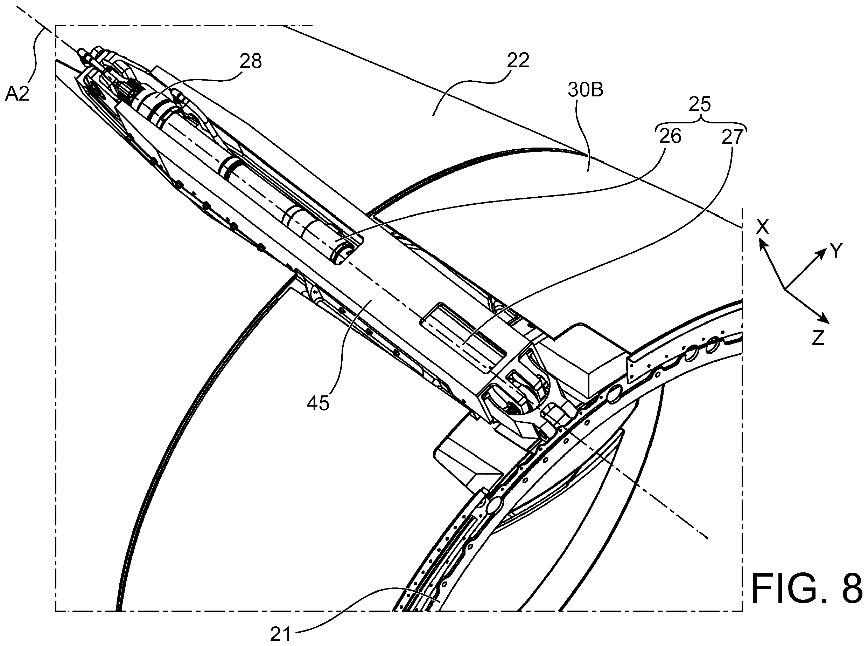

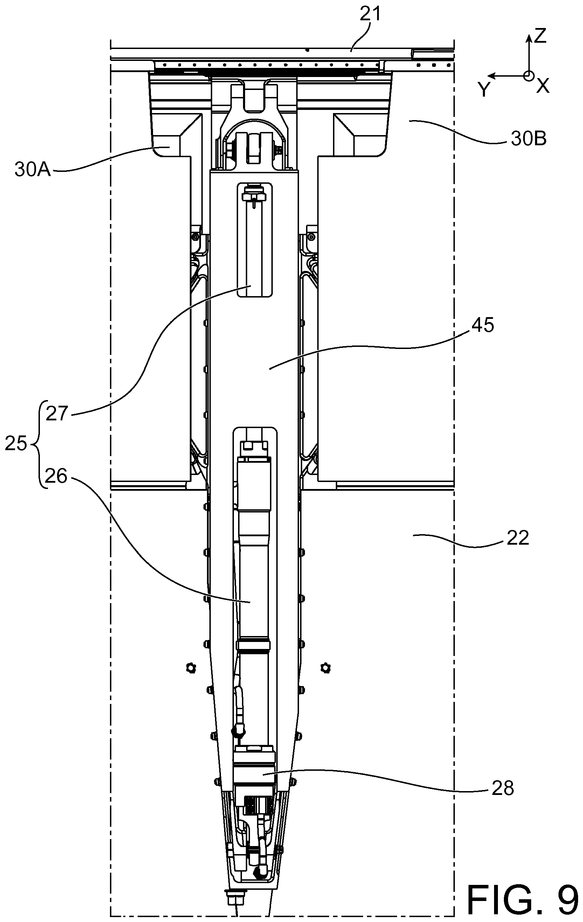

En configuration de poussée directe, les grilles 23 sont couvertes, en l'occurrence radialement à l'intérieur par une structure interne 30A (visible sur les figures 5 et 9) et radialement à l'extérieur par un carénage externe 30B (visible sur les figures 8 et 9). La structure interne 30A et le carénage 30B sont solidaires du cadre avant 21. La structure interne 30A est notamment configurée pour empêcher le fluide circulant dans l'ensemble propulsif 2 d'accéder aux grilles 23 et donc de sortir de l'ensemble propulsif 2 via les grilles 23.

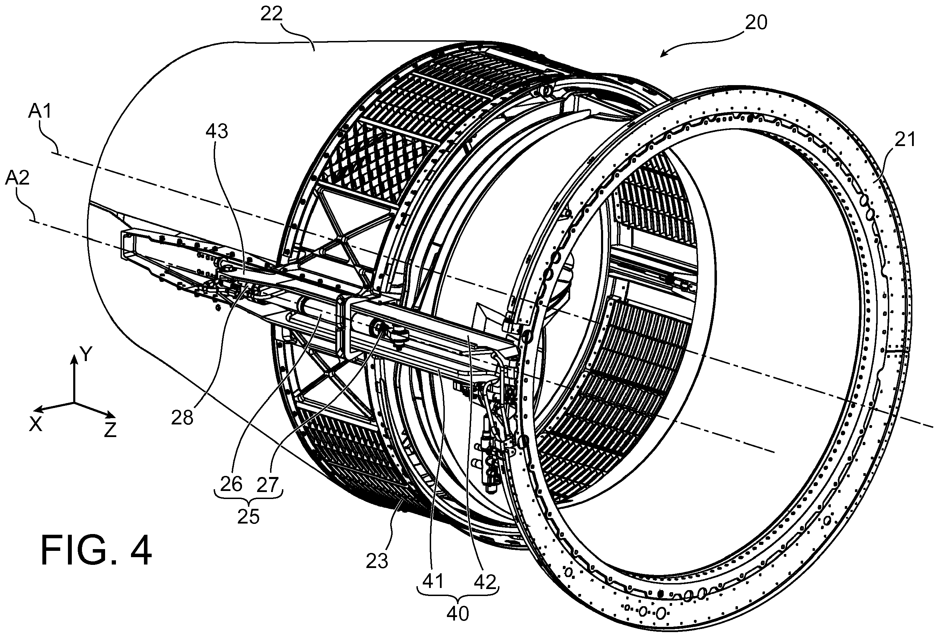

Les figures 4, 6 et 7 montrent l'inverseur 20 dans une configuration d'inversion de poussée, dans laquelle la structure externe mobile 22 est dans une position d'ouverture, c'est-à-dire dans une position reculée par rapport au cadre avant 21 de la structure fixe.

En position d'ouverture, la structure externe mobile 22 dégage une ouverture radiale permettant d'évacuer le flux mélangé afin de générer une contre-poussée.

Dans cet exemple, l'ouverture radiale est constituée par des ouvertures des grilles 23, étant entendu que l'espace situé axialement entre les grilles 23 et le cadre avant 21 reste obturé par la structure interne 30A et le carénage 30B, puisque ceux-ci sont solidaires du cadre avant 21.

Dans un mode de réalisation non représenté, l'inverseur 20 ne comprend pas de grilles 23, l'ouverture radiale étant constituée par un espace vide correspondant sensiblement en l'espace occupé par les grilles 23 dans le mode de réalisation des figures 3 à 9.

L'utilisation de grilles 23 est généralement préférable car celles-ci permettent de maximiser la composante axiale du flux en sortie de l'ouverture radiale et par conséquent d'augmenter l'effort de contre-poussée, compte tenu typiquement de la forme incurvée des aubes (non représentées) délimitant les ouvertures des grilles 23.

La réorientation des flux primaire 14A et secondaire 14B en direction des grilles 23 est réalisée par tout moyen conventionnel, par exemple à l'aide de volets pivotants (non représentés) reliés d'une part à la structure externe mobile 22 et d'autre part à la structure fixe de l'inverseur 20 de manière à se déployer radialement dans l'ensemble propulsif 2 lorsque la structure externe mobile 22 est ouverte et à se rétracter lorsque celle-ci est fermée.

Dans cet exemple, le déplacement de la structure externe mobile 22 entre les positions de fermeture et d'ouverture est réalisé par un unique actionneur 25.

En référence à la figure 3, l'actionneur 25 est un vérin s'étendant le long d'un axe d'actionnement A2 sensiblement parallèle à l'axe central longitudinal A1.

Le vérin 25 comprend de manière classique un corps 26 formant une partie fixe de ce vérin 25 et une tige 27 formant une partie mobile de ce vérin 25.

La tige 27 est solidaire d'un piston (non représenté) logé dans un volume intérieur cylindrique (non représenté) du corps 26, le piston séparant ce volume cylindrique en deux chambres hermétiques et isolées l'une par rapport à l'autre. Le volume de ces deux chambres n'est pas identique puisque l'une d'elle est traversée par la tige 27 reliée au piston.

L'introduction d'un fluide sous pression dans la chambre la plus grande, ou grande chambre, permet de déplacer le piston et la tige 27 dans un premier sens de déplacement le long de l'axe A2 entraînant un déploiement du vérin 25. L'introduction d'un fluide sous pression dans la chambre la plus petite, ou petite chambre, permet le déplacement du piston et de la tige 27 dans un deuxième sens de déplacement le long de l'axe A2 entraînant une rétractation du vérin 25.

Le corps 26 comprend deux extrémités axiales, en l'occurrence une extrémité avant située du côté de la tige 27 et une extrémité arrière opposée à l'extrémité avant.

En référence aux figures 3 et 4, le vérin 25 est configuré pour placer la structure externe mobile 22 en position d'ouverture lorsque le vérin 25 est rétracté et pour placer la structure externe mobile 22 en position de fermeture lorsque le vérin 25 est déployé.

Pour ce faire, le corps 26 du vérin 25 est dans cet exemple relié à la structure fixe de l'inverseur 20 par son extrémité arrière 28 et le vérin 25 est orienté vers l'avant de l'inverseur 20, c'est-à-dire vers le cadre avant 21. L'extrémité libre de la tige 27, c'est-à-dire l'extrémité opposée à celle qui est reliée au piston, est quant à elle reliée à une pièce 45 solidaire de la structure externe mobile 22 (voir plus loin ci-dessous).

Une telle configuration du vérin 25 permet de réduire ses dimensions puisque l'effort fourni par ce vérin lors de la pressurisation de la grande chambre est utilisé pour fermer, sur-escamoter et ralentir l'ouverture de la structure externe mobile 22, tandis que l'effort fourni lors de la pressurisation de la petite chambre est utilisé pour ouvrir la structure externe mobile 22. L'effort nécessaire pour fermer la structure externe mobile 22 est en effet plus important que l'effort à fournir pour ouvrir cette structure 22, celle-ci étant notamment soumise à des forces aérodynamiques ayant une composante axiale orientée de l'amont vers l'aval.

Le guidage de la structure externe mobile 22 lors de son déplacement entre les positions de fermeture et d'ouverture est assuré simultanément par un dispositif de guidage principal décrit ci-après et par un dispositif de guidage auxiliaire 50 visible sur les figures 5 et 6.

Le dispositif de guidage principal comprend dans cet exemple une coulisse 40 formée par deux rails 41 et 42 solidaires de la structure fixe de l'inverseur 20. Les rails 41 et 42 sont visibles sur les figures 3, 4 et 7.

Dans cet exemple, les rails 41 et 42 s'étendent parallèlement à l'axe d'actionnement A2, de part et d'autre du vérin 25, de sorte que ce dernier est logé entre les rails 41 et 42.

Plus précisément, le vérin 25 est logé dans la coulisse 40 sur toute sa longueur. D'une part, l'extrémité arrière 28 du corps 26 du vérin 25 est reliée à une extrémité arrière 43 de la coulisse 40 (voir figure 4). D'autre part, les rails 41 et 42 sont dimensionnés de manière à s'étendre de part et d'autre de la tige 27, y compris lorsque le vérin 25 est déployé. Lorsque le vérin 25 est déployé, ladite extrémité libre de la tige 27 est axialement située au niveau d'une extrémité avant 44 de la coulisse 40 (voir figure 3).

Le dispositif de guidage principal comprend par ailleurs une pièce de glissement 45 solidaire de la structure externe mobile 22.

En référence à la figure 8, la pièce de glissement 45 est reliée à la structure externe mobile 22 de manière à s'étendre radialement vers l'extérieur de cette structure 22.

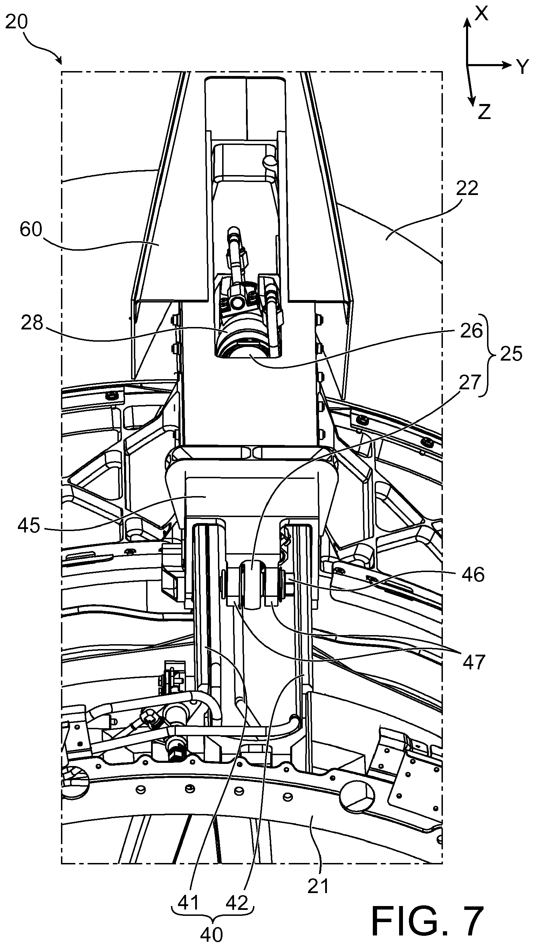

La pièce de glissement 45 a une forme complémentaire à celle des rails 41 et 42 (voir figure 7) permettant son glissement le long de la coulisse 40 lorsque la structure externe mobile 22 est déplacée entre les positions de fermeture et d'ouverture, et assurant ainsi le guidage de la structure externe mobile 22 lors d'un tel déplacement.

En référence à la figure 7, la pièce de glissement 45 est dans cet exemple reliée à la tige 27 du vérin 25 au moyen d'un axe d'entraînement 46 s'étendant perpendiculairement par rapport à l'axe d'actionnement A2. L'axe d'entraînement 46 traverse à la fois un orifice (non représenté) réalisé dans ladite extrémité libre de la tige 27 et des orifices (non représentés) réalisés dans un organe de liaison 47 de la pièce de glissement 45. L'organe de liaison 47 comprend ici deux pattes s'étendant de part et d'autre de l'extrémité libre de la tige 27.

Le dispositif de guidage auxiliaire 50 n'est pas représenté sur les figures 3 et 4 mais est visible sur la figure 6. Ce dispositif 50 comprend de manière conventionnelle des rails solidaires de la structure fixe de l'inverseur 20 et une pièce de glissement solidaire de la structure externe mobile 22.

Il est représenté à la figure 3 deux plans longitudinaux médians P1 et P2 permettant de localiser les différents éléments de l'inverseur 20 les uns par rapport aux autres.

Chacun de ces plans fictifs P1 et P2 est un plan médian au sens où il passe par l'axe A1 qui est un axe central de l'inverseur 20, et un plan longitudinal puisque l'axe A1 est aussi un axe longitudinal parallèle à la direction longitudinale Z.

En référence à la figure 3, le plan P2 passe aussi par l'axe d'actionnement A2 du vérin 25, et le plan P1 est perpendiculaire au plan P2.

Ainsi, le vérin 25 et le dispositif de guidage principal sont tous deux situés d'un même côté du plan P1 et le dispositif de guidage auxiliaire 50 est situé de l'autre côté du plan P1. Le vérin 25 et les dispositifs de guidage principal et auxiliaire sont chacun traversés par le plan P2.

Comme indiqué plus haut, les rails 41 et 42 sont situés de part et d'autre du vérin 25 et par conséquent du plan P2. Bien qu'aucun de ces rails 41 et 42 ne soit en tant que tel traversé par le plan P2, le dispositif de guidage principal, qui comprend les deux rails 41 et 42 et la pièce de glissement 45, est dans son ensemble traversé par le plan P2.

En référence à la figure 7, l'actionneur 25 et le dispositif de guidage sont dans cet exemple abrités par un carénage 60 d'un mât (non représenté sur cette figure) d'accrochage de l'ensemble propulsif 2 au fuselage 3 de l'avion 1, ou plus généralement à un mât d'accrochage de l'ensemble propulsif 2 à un aéronef.

Dans cet exemple, la structure externe mobile 22 est configurée pour orienter l'écoulement de fluide générant la poussée selon une direction oblique par rapport à l'axe central longitudinal A1, plus précisément de sorte que l'écoulement sortant de l'ensemble propulsif 2 tende à s'éloigner du mât.

En référence à la figure 5, la structure externe mobile 22 comprend à cet effet une extrémité de sortie 221 définissant un plan transversal formant un angle B1 par rapport à la direction latérale X, ce plan transversal étant par conséquent oblique par rapport au premier plan longitudinal médian P1 et formant avec ce plan P1 un angle B2 complémentaire de B1.

Une telle géométrie de l'extrémité de sortie 221 de la structure externe mobile 22 permet d'orienter la poussée à l'opposé du mât, c'est-à-dire vers le côté du plan P1 opposé au côté où se trouve l'actionneur 25 et le dispositif de guidage principal.

La poussée ainsi orientée génère sur la structure externe mobile 22 un effort tendant à faire basculer cette structure autour de la direction verticale Y.

Selon l'invention, ce moment de basculement est compensé par l'action de deux verrous primaires 70 qui sont décalés par rapport à l'axe A1 et par rapport au plan P1, selon la direction latérale X vers l'extérieur par rapport au mât.

De manière connue en soi, les verrous primaires 70 permettent de verrouiller la structure externe mobile 22 en position de fermeture. Seul l'un de ces verrous 70 est représenté sur la figure 5.

Le verrou primaire 70 visible sur la figure 5 comprend principalement un premier élément d'accroche 71 solidaire de la structure externe mobile 22 et un deuxième élément d'accroche 72 solidaire de la structure fixe 21 de l'inverseur 20. Les premier et deuxième éléments d'accroche 71 et 72 s'étendent le long d'un axe de verrouillage A3 sensiblement parallèle à l'axe central longitudinal A1 et peuvent être déplacés entre un état de verrouillage et un état de déverrouillage à l'aide de tout moyen de commande conventionnel. Dans l'état de verrouillage, les premier et deuxième éléments d'accroche 71 et 72 coopèrent l'un avec l'autre de manière à verrouiller la structure externe mobile 22 en position de fermeture (voir figure 5). Dans l'état de déverrouillage, les premier et deuxième éléments d'accroche 71 et 72 sont désolidarisés l'un de l'autre pour permettre à la structure externe mobile 22 d'être déplacée entre les positions de fermeture et d'ouverture sous l'action du vérin 25.

L'autre verrou primaire, non visible sur la figure 5, est similaire à celui qui vient d'être décrit.

Dans cet exemple, les deux verrous primaires 70 sont situés dans un plan de verrouillage parallèle au plan longitudinal médian P1. Ce plan de verrouillage passe par l'axe de verrouillage A3 respectif de chacun de ces verrous.

Circonférentiellement, chacun des deux verrous primaires 70 est dans cet exemple positionné à une distance angulaire de l'actionneur 25 d'environ 110°. Cette distance angulaire dépend notamment de l'angle B1 de l'extrémité de sortie 221 de la structure externe mobile 22 puisque cet angle a une incidence directe sur l'amplitude du moment de basculement.

En référence aux figures 3 et 5, il découle de la description qui précède que les verrous primaires 70 sont d'une part tous deux situés du côté du plan longitudinal médian P1 opposé au côté où est situé l'actionneur 25. L'écoulement de poussée s'éloignant de l'actionneur 25, cette configuration permet de compenser le moment de basculement et de limiter ainsi les déformations de la structure externe mobile 22.

D'autre part, le verrou primaire 70 visible sur la figure 5 est situé d'un côté du plan longitudinal médian P2 tandis que l'autre verrou primaire, non visible, est situé de l'autre côté de ce plan P2.

Les modes de réalisation qui viennent d'être décrits ne sont nullement limitatifs. Par exemple, l'inverseur 20 peut comprendre des butées de fin de course (non représentées) configurées pour retenir axialement la structure externe mobile 22 en position d'ouverture. Dans un mode de réalisation, l'une de ces butées est située du même côté du plan P1 que l'actionneur 25 et est centrée par rapport au plan P2. Les autres butées peuvent être positionnées à équidistance les unes par rapport aux autres de sorte que chacune d'elle soit traversée soit par le plan P1 soit par le plan P2.

Dans un mode de réalisation non représenté, la structure externe mobile 22 est une structure connue sous l'appellation « O-Duct », c'est-à-dire une structure monobloc quasi annulaire comprenant une ouverture de passage de mât.

## Revendications

1. Inverseur de poussée (20) pour ensemble propulsif (2) d'aéronef (1), cet inverseur (20) comprenant :
- une structure externe mobile (22) présentant un axe central longitudinal (A1), cette structure externe (22) étant mobile entre une position de fermeture, dans laquelle celle-ci est apte à guider un écoulement de fluide dans l'ensemble propulsif (2) de manière à générer une poussée, et une position d'ouverture dans laquelle la structure externe mobile (22) dégage une ouverture radiale apte à évacuer une partie dudit écoulement de fluide de l'ensemble propulsif (2) de manière à générer une contre-poussée,
- un actionneur (25), tel qu'un vérin, configuré pour déplacer la structure externe mobile (22) entre les positions de fermeture et d'ouverture,
- deux verrous primaires (70) configurés pour verrouiller la structure externe mobile (22) en position de fermeture,
cet inverseur (20) étant configuré pour orienter l'écoulement de fluide générant la poussée selon une direction oblique par rapport à l'axe central longitudinal (A1), vers un premier côté d'un premier plan longitudinal médian (P1) passant par l'axe central longitudinal (A1), cet inverseur (20) étant **caractérisé en ce que** la structure externe mobile (22) est annulaire, **en ce que** les verrous primaires (70) sont tous deux situés dudit premier côté de ce premier plan longitudinal médian (P1), et **en ce que** l'actionneur (25) est situé de l'autre côté du premier plan longitudinal médian (P1), l'un de ces verrous primaires (70) étant situé d'un côté d'un deuxième plan longitudinal médian (P2) perpendiculaire au premier plan longitudinal médian (P1), l'autre verrou primaire étant situé de l'autre côté de ce deuxième plan longitudinal médian (P2).

2. Inverseur de poussée (20) selon la revendication 1, dans lequel la structure externe mobile (22) comprend une extrémité de sortie (221) définissant un plan transversal oblique par rapport au premier plan longitudinal médian (P1) de manière à orienter l'écoulement de fluide générant la poussée selon ladite direction oblique.

3. Inverseur de poussée (20) selon la revendication 1 ou 2, dans lequel les deux verrous primaires (70) sont situés dans un plan de verrouillage parallèle audit premier plan longitudinal médian (P1).

4. Inverseur de poussée (20) selon l'une quelconque des revendications 1 à 3, dans lequel chacun des deux verrous primaires (70) est positionné à une distance angulaire de l'actionneur (25) comprise entre 100° et 120°, de préférence environ 110°.

5. Inverseur de poussée (20) selon l'une quelconque des revendications 1 à 4, dans lequel ledit actionneur (25) est unique.

6. Inverseur de poussée (20) selon l'une quelconque des revendications 1 à 5, dans lequel l'actionneur (25) est traversé par le deuxième plan longitudinal médian (P2).

7. Ensemble propulsif (2) d'aéronef (1), cet ensemble propulsif (2) comprenant un inverseur de poussée (20) selon l'une quelconque des revendications 1 à 6.

8. Ensemble propulsif (2) selon la revendication 7, cet ensemble propulsif (2) comprenant un mât (60A, 60B) d'accrochage de cet ensemble propulsif (2) à un fuselage (3) dudit aéronef (1), le mât (60A, 60B) comprenant un carénage (60) abritant ledit actionneur (25).

9. Aéronef (1) comprenant au moins un ensemble propulsif (2) selon la revendication 7 ou 8.

## Patentansprüche

1. Schubumkehrvorrichtung (20) für eine Antriebsanordnung (2) eines Flugzeugs (1), wobei die Umkehrvorrichtung (20) umfasst:
- eine bewegliche äußere Struktur (22), die eine längs gerichtete Mittelachse (A1) aufweist, wobei die äußere Struktur (22) beweglich ist, zwischen einer geschlossenen Position, in der sie in der Lage ist, einen Fluidstrom durch die Antriebsanordnung (2) zu leiten, um einen Schub zu erzeugen, und einer geöffneten Position, in der die bewegliche äußere Struktur (22) eine radiale Öffnung freigibt, die in der Lage ist, einen Teil des Fluidstroms aus der Antriebsanordnung (2) abzuleiten, um einen Gegenschub zu erzeugen,
- einen Aktuator (25), wie z. B. einen Zylinder, der konfiguriert ist, um die bewegliche äußere Struktur (22) zwischen der geschlossenen und der geöffneten Position zu verschieben,
- zwei primäre Verriegelungen (70), die konfiguriert sind, um die bewegliche äußere Struktur (22) in der geschlossenen Position zu verriegeln,
wobei die Umkehrvorrichtung (20) konfiguriert ist, um den Fluidstrom, der den Schub erzeugt, entlang einer in Bezug auf die längs gerichtete Mittelachse (A1) schrägen Richtung zu einer ersten Seite einer ersten Längsmittelebene (P1), die durch die längs gerichtete Mittelachse (A1) verläuft, zu lenken, wobei die Umkehrvorrichtung (20) **dadurch gekennzeichnet ist, dass** die bewegliche äußere Struktur (22) ringförmig ist, dass die primären Verriegelungen (70) beide auf der ersten Seite der ersten Längsmittelebene (P1) angeordnet sind, und dass der Aktuator (25) auf der anderen Seite der ersten Längsmittelebene (P1) angeordnet ist, wobei eine der primären Verriegelungen (70) auf einer Seite einer zweiten Längsmittelebene (P2) angeordnet ist, die senkrecht zur ersten Längsmittelebene (P1) ist, und die andere primäre Verriegelung auf der anderen Seite der zweiten Längsmittelebene (P2) angeordnet ist.

2. Schubumkehrvorrichtung (20) nach Anspruch 1, wobei die bewegliche äußere Struktur (22) ein Auslassende (221) umfasst, das eine Querebene definiert, die in Bezug zur ersten Längsmittelebene (P1) schräg verläuft, so dass der Fluidstrom, der den Schub erzeugt, entlang der schrägen Richtung gelenkt wird.

3. Schubumkehrvorrichtung (20) nach Anspruch 1 oder 2, wobei die zwei primären Verriegelungen (70) in einer Verriegelungsebene angeordnet sind, die parallel zur ersten Längsmittelebene (P1) ist.

4. Schubumkehrvorrichtung (20) nach einem der Ansprüche 1 bis 3, wobei jede der zwei primären Verriegelungen (70) in einem Winkelabstand vom Aktuator (25) positioniert ist, der zwischen 100° und 120° liegt, vorzugsweise etwa 110°.

5. Schubumkehrvorrichtung (20) nach einem der Ansprüche 1 bis 4, wobei der Aktuator (25) einmalig ist.

6. Schubumkehrvorrichtung (20) nach einem der Ansprüche 1 bis 5, wobei der Aktuator (25) von der zweiten Längsmittelebene (P2) durchquert wird.

7. Antriebsanordnung (2) eines Flugzeugs (1), wobei die Antriebsanordnung (2) eine Schubumkehrvorrichtung (20) nach einem der Ansprüche 1 bis 6 umfasst.

8. Antriebsanordnung (2) nach Anspruch 7, wobei die Antriebsanordnung (2) einen Mast (60A, 60B) zum Einhängen der Antriebsanordnung (2) an einem Rumpf (3) des Flugzeugs (1) umfasst, wobei der Mast (60A, 60B) eine Verkleidung (60) umfasst, die den Aktuator (25) unterbringt.

9. Flugzeug (1), mindestens eine Antriebsanordnung (2) nach Anspruch 7 oder 8 umfassend.

## Claims

1. A thrust reverser (20) for an aircraft (1) propulsion unit (2), this reverser (20) comprising:
- a movable external structure (22) having a central longitudinal axis (A1), this external structure (22) being movable between a closed position, wherein said external structure is capable of guiding a flow of fluid in the propulsion unit (2) so as to generate a thrust, and an open position wherein the movable external structure (22) releases a radial opening capable of evacuating a portion of said flow of fluid from the propulsion unit (2) so as to generate a counter-thrust,
- an actuator (25), such as a cylinder, configured to move the movable external structure (22) between the closed and open positions,
- two primary latches (70) configured to latch the movable external structure (22) in the closed position,
this reverser (20) being configured to direct the thrust-generating flow of fluid in an oblique direction with respect to the central longitudinal axis (A1), towards a first side of a first median longitudinal plane (P1) passing through the central longitudinal axis (A1),
this reverser (20) being **characterised in that** the movable external structure (22) is annular, **in that** the primary latches (70) are both located on said first side of this first median longitudinal plane (P1), and **in that** the actuator (25) is located on the other side of the first median longitudinal plane (P1), one of these primary latches (70) being located on one side of a second median longitudinal plane (P2) perpendicular to the first median longitudinal plane (P1), the other primary latch being located on the other side of this second median longitudinal plane (P2).

2. The thrust reverser (20) according to claim 1, wherein the movable external structure (22) comprises an outlet end (221) defining an oblique transverse plane with respect to the first median longitudinal plane (P1) so as to direct the flow of fluid generating the thrust in said oblique direction.

3. The thrust reverser (20) according to claim 1 or 2, wherein the two primary latches (70) are located in a latching plane parallel to said first median longitudinal plane (P1).

4. The thrust reverser (20) according to any one of claims 1 to 3, wherein each of the two primary latches (70) is positioned at an angular distance from the actuator (25) comprised between 100° and 120°, preferably about 110°.

5. The thrust reverser (20) according to any one of claims 1 to 4, wherein said actuator (25) is unique.

6. The thrust reverser (20) according to any one of claims 1 to 5, wherein the actuator (25) is traversed by the second median longitudinal plane (P2).

7. An aircraft (1) propulsion unit (2), this propulsion unit (2) comprising a thrust reverser (20) according to any one of claims 1 to 6.

8. The propulsion unit (2) according to claim 7, this propulsion unit (2) comprising a pylon (60A, 60B) for attaching this propulsion unit (2) to a fuselage (3) of said aircraft (1), the pylon (60A, 60B) comprising a fairing (60) sheltering said actuator (25).

9. An aircraft (1) comprising at least one propulsion unit (2) according to claim 7 or 8.
